# EUROPEAN PATENT APPLICATION

(11) **EP 4 800 830 A1**
(43) Date of publication of application: **02.09.2026**
(21) Application number: 24883715.5
(22) Date of filing: 16.01.2024
(51) Int. Cl.: H01M 50/543

(54) **BATTERY CELL, MANUFACTURING METHOD THEREFOR, BATTERY, AND ELECTRICAL APPARATUS**

(30) Priority: 03.11.2023 CN 202311454187
(71) Applicant: Contemporary Amperex Technology Co., Limited, Ningde, Fujian 352100 (CN)
(72) Inventor: WU, Yichen, Ningde, Fujian 352100 (CN); LI, Shida, Ningde, Fujian 352100 (CN)
(74) Representative: Ziebig Hengelhaupt Intellectual Property Attorneys Patentanwaltskanzlei PartGmbB
(86) International application number: PCT/CN2024/072439
(87) International publication number: WO 2025/091697

(57) **Abstract**

Disclosed in the present application are a battery cell, a manufacturing method therefor, a battery and an electrical apparatus. The battery cell comprises an electrode assembly, a casing and a first electrode terminal. The casing is provided with an accommodating cavity, the Brinell hardness of the casing being greater than or equal to 30 HB. The electrode assembly is arranged in the accommodating cavity, a first tab being provided at the end part of the electrode assembly in a first direction. The first electrode terminal is partially arranged in the accommodating cavity and is connected to the first tab, the first electrode terminal penetrating through the casing and extending to the outer side of the casing.

## Description

### CROSS-REFERENCE TO RELATED APPLICATION

The present application claims priority to Chinese Patent Application No. 202311454187.8 filed on November 3, 2023 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell and a manufacturing method therefor, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools.

In the development of battery technologies, how to improve the energy density of battery cells is a research direction in the battery technologies.

### SUMMARY

The present application provides a battery cell and a manufacturing method therefor, a battery, and an electric device, which can improve energy density.

In a first aspect, the present application provides a battery cell. The battery cell includes an electrode assembly, a shell, and a first electrode terminal. The shell is provided with an accommodating cavity, and a Brinell hardness of the shell is greater than or equal to 30 HB. The electrode assembly is arranged in the accommodating cavity, and an end part of the electrode assembly in a first direction is provided with a first tab. A part of the first electrode terminal is arranged in the accommodating cavity and connected to the first tab, and the first electrode terminal passes through the shell and extends to an outer side of the shell.

The first electrode terminal is directly connected to the first tab, so that an adapter structure can be omitted, thereby simplifying the structure of the battery cell and improving the energy density. The shell has a large hardness and is not easily crushed when being compressed, thereby protecting the electrode assembly and improving the reliability of the battery cell.

In some embodiments, the first tab is welded to the first electrode terminal to reduce the contact resistance between the first tab and the first electrode terminal, improve the current passage capacity, and increase the connection strength between the first tab and the first electrode terminal.

In some embodiments, the battery cell further includes an insulating member. At least a part of the insulating member is arranged between the shell and the first electrode terminal and is configured to insulate the shell from the first electrode terminal. The insulating member can reduce the risk of conduction between the first electrode terminal and the shell, thereby improving the reliability of the battery cell.

In some embodiments, the insulating member is bonded to the shell and the first electrode terminal. The insulating member can fix the first electrode terminal to the shell, thereby improving the stability of the first electrode terminal, reducing the force applied onto the joint between the first electrode terminal and the first tab when the battery cell is subjected to an external impact, and reducing the risk of failure of the battery cell.

In some embodiments, under an ambient temperature of 25 °C, an elastic modulus of the insulating member is less than an elastic modulus of the first electrode terminal. When the battery cell is subjected to an external impact, the insulating member can play a buffering role through deformation, reducing the force applied onto the joint between the first electrode terminal and the insulating member and the force applied onto the joint between the shell and the insulating member, reducing the risk of connection failure, and improving the reliability of the battery cell.

In some embodiments, the insulating member includes a first insulating layer and a second insulating layer that are stacked and extend in the first direction, and the first electrode terminal passes between the first insulating layer and the second insulating layer. In the first direction, an inner end of the first electrode terminal extends beyond an inner end of the second insulating layer, and a part of the first electrode terminal extending beyond the second insulating layer is connected to the first tab. In the first direction, an inner end of the first insulating layer extends beyond the inner end of the first electrode terminal.

At least a partial region of the first electrode terminal is not covered by the second insulating layer, which facilitates the connection between the first electrode terminal and the first tab. The inner end of the first insulating layer extends beyond the inner end of the first electrode terminal, so that the first insulating layer can insulate the first electrode terminal from the inner surface of the shell.

In some embodiments, the shell is provided with a first recess, and the first recess is arranged on an outer side of the accommodating cavity. The first electrode terminal includes a first electrode part located on the outer side of the shell, the first electrode part is configured so that a projection of the first electrode part in a second direction at least partially overlaps a projection of the first recess in the second direction, and the second direction is perpendicular to the first direction.

In the embodiments of the present application, the first recess and the first electrode part can be enabled to share a part of the space in the first direction, thereby increasing the space utilization rate of the battery cell in the first direction and improving the energy density of the battery cell.

In some embodiments, the first electrode part extends out from an end part of the shell in the first direction. At least a part of the first electrode part is accommodated in the first recess.

At least a part of the first electrode part is accommodated in the first recess, which can reduce the additional space occupied by the first electrode part in the second direction, increase the space utilization rate of the battery cell in the second direction, and improve the energy density of the battery cell.

In some embodiments, the first electrode part extends out from an end part of the shell in the first direction. At least a part of the first electrode part is located on one side of the shell facing away from the first recess in the second direction.

When two battery cells are arranged in the second direction, the first recess of one battery cell can avoid the first electrode terminal of the other battery cell, thereby improving the space utilization rate and increasing the energy density of the battery.

In some embodiments, the shell includes a first wall and a second wall. The first wall and the second wall are located on both sides of the accommodating cavity in the second direction, respectively. The first recess is recessed from the second wall toward the first wall. The first electrode terminal extends out from the first wall in the second direction. At least a part of the first electrode part is located on one side of the first wall facing away from the first recess.

When two battery cells are arranged in the second direction, the first recess of one battery cell can avoid the first electrode part of the other battery cell, thereby improving the space utilization rate and increasing the energy density of the battery.

In some embodiments, the first electrode terminal further includes a second electrode part and a third electrode part. The second electrode part passes through the first wall, and the first electrode part and the third electrode part extend in a same direction from both ends of the second electrode part, respectively. The third electrode part is arranged in the accommodating cavity, and is stacked with and connected to the first tab in the second direction.

By providing the second electrode part and the third electrode part, the connection between the first electrode terminal and the first tab is facilitated. The first electrode part and the third electrode part extend in the same direction, so that the first electrode part and the third electrode part can sandwich a part of the first wall from both sides, thereby improving the connection strength between the first electrode terminal and the first wall.

In some embodiments, a dimension L1 of the shell in the first direction is greater than a dimension L2 of the shell in the second direction. The dimension L1 of the shell in the first direction is greater than a dimension L3 of the shell in a third direction, and any two of the third direction, the first direction, and the second direction are perpendicular to each other.

The first tab is arranged at the end part of the electrode assembly in the first direction. The larger L1 is, the smaller the proportion of the dimension of the first tab in the first direction is, and the higher the space utilization rate of the battery cell in the first direction is. In the embodiments of the present application, L1 is set to be greater than L2 and L3, which can improve the space utilization rate and energy density of the battery cell.

In some embodiments, the dimension of the shell in the first direction is L1, the dimension of the shell in the second direction is L2, and the dimension of the shell in the third direction is L3. 1.2 ≤ L1/L3 ≤ 18, and 1.2 ≤ L3/L2 ≤ 15.

The first tab is arranged at the end part of the electrode assembly in the first direction, which will additionally occupy space in the first direction. The larger L1 is, the smaller the proportion of the dimension of the first tab in the first direction is, and the higher the space utilization rate of the battery cell in the first direction is. The larger L2 is, the greater the current passage area of the first tab is, the better the current passage capacity of the first tab is, and the lower the heat generation is.

The smaller L3 is, the shorter the path of the electrode assembly for outward heat dissipation is, and the lower the temperature rise of the battery cell during charging and discharging is. However, the smaller L3 is, the thinner the battery cell is, and the battery cell is more likely to deform under external impact during the production, transportation, and use of the battery cell.

On the premise that the volume of the battery cell is constant, L1/L3 is defined to be 1.2 to 18, and L3/L2 is defined to be 1.2 to 15, so that the space utilization rate of the battery cell in the first direction and the current passage capacity of the first tab can be balanced, the temperature rise of the battery cell can be reduced, the risk of deformation of the battery cell under external impact can be reduced, and the reliability and the cycle performance of the battery cell can be improved.

In some embodiments, the shell includes a first wall and a second wall oppositely arranged in the second direction, the second direction is perpendicular to the first direction and parallel to a thickness direction of the battery cell, and both the first wall and the second wall are in a shape of a flat plate. The second wall is provided with a pressure relief mechanism. In the case of thermal runaway in the battery cell, the pressure relief mechanism can discharge the high-temperature substance in the shell in time, thereby reducing the internal pressure of the battery cell, reducing the risk of explosion of the battery cell, and improving the reliability of the battery cell.

In some embodiments, the second wall is provided with two edges oppositely arranged in the first direction, and spacings between the pressure relief mechanism and the two edges in the first direction are D1 and D2, respectively. D1/D2 is 0.5 to 2.

The pressure relief structure is arranged proximal to the middle of the second wall in the first direction, so that in the case of thermal runaway in the battery cell, the gas at both ends of the accommodating cavity in the first direction can quickly flow to the pressure relief mechanism, thereby reducing the pressure difference between both ends of the accommodating cavity and improving the reliability.

In some embodiments, the shell is provided with a first through hole and a second through hole. The first through hole and the second through hole communicate with both ends of the accommodating cavity in the first direction, respectively, and the first through hole and/or the second through hole are configured to inject an electrolyte.

By providing the first through hole and the second through hole, the requirement for electrolyte injection pressure can be reduced. Illustratively, when the electrolyte is injected through the first through hole, the gas inside the shell may be discharged through the second through hole, thereby reducing resistance to the injection of the electrolyte, saving time, and improving the infiltration effect of the electrolyte on the electrode assembly.

In some embodiments, the shell includes a first wall and a second wall. The first wall and the second wall are located on both sides of the accommodating cavity in the second direction, respectively, and the second direction is perpendicular to the first direction. Both the first through hole and the second through hole are formed in the first wall; or both the first through hole and the second through hole are formed in the second wall; or the first through hole is formed in the first wall, and the second through hole is formed in the second wall.

In some embodiments, the shell includes a third wall and a fourth wall. The third wall and the fourth wall are located at both ends of the accommodating cavity in the first direction, respectively. The third wall is provided with the first through hole, and the fourth wall is provided with the second through hole.

The first through hole and the second through hole are formed in the third wall and the fourth wall, respectively, so that the included angle between the injection direction of the electrolyte and the first direction can be reduced, thereby improving the injection efficiency.

In some embodiments, the electrode assembly includes a main body part, and the first tab extends from the main body part in the first direction and beyond the third wall. In the first direction, the first through hole at least partially overlaps the first tab.

When the electrolyte is injected through the first through hole, the first tab can block the electrolyte to a certain extent, thereby playing a buffering role, reducing the impact force of the electrolyte on the main body part, and reducing the risk of backfolding of the separator of the main body part, thereby reducing the risk of a short circuit and improving the reliability.

In some embodiments, a hole diameter of the first through hole is H1, a volume of the accommodating cavity is H2, and 100 ml/mm ≤ H2/H1 ≤ 1000 ml/mm.

The smaller H2/H1 is, the higher the injection efficiency of the electrolyte is. Correspondingly, the smaller H2/H1 is, the lower the strength around the first through hole is, and the higher the risk of deformation and cracking of the shell at the first through hole is when the battery cell is subjected to an external impact. In the embodiments of the present application, H2/H1 is defined to be 100 ml/mm to 1000 ml/mm, which can improve the injection efficiency of the electrolyte, reduce costs, and improve the reliability of the battery cell.

In some embodiments, the shell includes a shell body and a cover plate. The shell body includes a shell main body and a first edge part extending from a circumferential edge of the shell main body. The cover plate includes a cover main body and a second edge part extending from a circumferential edge of the cover main body. The shell main body and the cover main body define, in an enclosing manner, the accommodating cavity, and the first edge part and the second edge part are connected to form a sealing structure. By providing the first edge part and the second edge part, the connection strength between the shell body and the cover plate can be improved, thereby improving the sealing effect.

In some embodiments, at least a part of the first edge part is welded to the second edge part to form a weld mark, and the sealing structure includes the weld mark. The welding process is simple and easy to implement. The weld mark has high strength and good sealing performance.

In some embodiments, the first electrode terminal passes between the first edge part and the second edge part. The battery cell further includes an insulating member. At least a part of the insulating member wraps a part of the first electrode terminal located between the first edge part and the second edge part and is bonded to the first edge part and the second edge part to insulate the first electrode terminal from the shell body and insulate the first electrode terminal from the cover plate. The insulating member and the sealing structure jointly achieve the sealing of the shell.

In some embodiments, at least a part of the sealing structure is bent toward the shell main body. By bending the sealing structure, the maximum dimension of the battery cell can be reduced, and the energy density of the battery cell can be improved.

In some embodiments, at least a part of the sealing structure is bent to one side of the cover main body facing away from the shell main body, which can reduce the dimension of the battery cell in the first direction or the dimension of the battery cell in the third direction.

In some embodiments, both the cover plate and the shell body are made of aluminum. Aluminum has high strength and good thermal conductivity. The use of the cover plate and the shell body made of aluminum can improve the cycle performance of the battery cell and increase the reliability of the battery cell. The density of aluminum is low. The use of the cover plate and the shell body made of aluminum can also reduce the weight of the battery cell and improve the energy density of the battery cell.

In some embodiments, the cover plate has a hardness range of 30 HB to 60 HB. On the premise that the hardness of the cover plate meets the requirement, the material of the cover plate may be flexibly provided to reduce the weight and cost of the cover plate.

In some embodiments, the cover plate has a thickness of 0.02 mm to 2 mm, which can balance the strength and weight of the cover plate, improve the reliability of the battery cell, and increase the energy density of the battery cell.

In some embodiments, the shell body has a hardness range of 30 HB to 60 HB. The hardness of the shell body is set to 30 HB to 60 HB, which can facilitate the forming of the shell body.

In some embodiments, the shell body has a thickness of 0.02 mm to 5 mm to balance the strength and weight of the shell body, improve the reliability of the battery cell, and increase the energy density of the battery cell.

In some embodiments, the electrode assembly further includes a second tab. The battery cell further includes a second electrode terminal. A part of the second electrode terminal is arranged in the accommodating cavity and connected to the second tab, and the second electrode terminal passes through the shell and extends to the outer side of the shell.

The second electrode terminal and the second tab are stacked and directly connected, so that an adapter structure can be omitted, thereby simplifying the structure of the battery cell and improving the energy density.

In some embodiments, the first tab and the second tab are located at both ends of the electrode assembly in the first direction, respectively, to increase the distance between the first tab and the second tab and reduce the risk of a short circuit between the first tab and the second tab.

In some embodiments, the first tab and the second tab are located at a same end of the electrode assembly in the first direction, so that the first tab and the second tab share space in the first direction, thereby improving the space utilization rate of the battery cell in the first direction.

In a second aspect, the present application provides a battery. The battery includes a plurality of battery cells according to any one of the embodiments of the first aspect.

In a third aspect, the present application provides an electric device. The electric device includes the battery according to any one of the embodiments of the second aspect. The battery is configured to provide electric energy.

In a fourth aspect, the embodiments of the present application further provide a manufacturing method for a battery cell. The method includes:
providing an electrode assembly, where an end part of the electrode assembly in a first direction is provided with a first tab;
providing a first electrode terminal;
connecting the first tab and the first electrode terminal; and
providing a shell, and arranging the electrode assembly in an accommodating cavity of the shell,
where a Brinell hardness of the shell is greater than or equal to 30 HB, a part of the first electrode terminal is arranged in the accommodating cavity, and the first electrode terminal passes through the shell and extends to an outer side of the shell.

In some embodiments, the step of connecting the first tab and the first electrode terminal includes: welding the first tab to the first electrode terminal.

In some embodiments, the step of providing the shell and arranging the electrode assembly in the accommodating cavity of the shell includes:
providing a shell body, where the shell body includes a shell main body and a first edge part extending from a circumferential edge of the shell main body;
placing the electrode assembly into the shell main body;
providing a cover plate, where the cover plate includes a cover main body and a second edge part extending from a circumferential edge of the cover main body; and
lidding the shell body with the cover plate, and connecting the first edge part and the second edge part to form a sealing structure,
where the shell main body and the cover main body define, in an enclosing manner, the accommodating cavity, and the first electrode terminal passes between the first edge part and the second edge part.

In some embodiments, the step of connecting the first edge part and the second edge part to form the sealing structure includes: connecting the first edge part and the second edge part by laser welding to form the sealing structure.

In some embodiments, the manufacturing method further includes: cutting the sealing structure; and bending the sealing structure toward the shell main body.

### BRIEF DESCRIPTION OF THE DRAWINGS

Features, advantages, and technical effects of exemplary embodiments of the present application will be described below with reference to the drawings.
FIG. 1 is a schematic structural view of a vehicle according to some embodiments of the present application;
FIG. 2 is an exploded schematic view of a battery according to some embodiments of the present application;
FIG. 3 is a schematic three-dimensional structure view of a battery cell according to some embodiments of the present application;
FIG. 4 is a schematic top view of a battery cell according to some embodiments of the present application;
FIG. 5 is a cross-sectional schematic view of a battery cell according to some embodiments of the present application;
FIG. 6 is an enlarged schematic view of the battery cell shown in FIG. 5 at the boxed portion;
FIG. 7 is a cross-sectional schematic view of a battery cell according to some other embodiments of the present application;
FIG. 8 is an enlarged schematic view of the boxed portion in FIG. 7;
FIG. 9 is a partial cross-sectional schematic view of a battery cell according to some other embodiments of the present application;
FIG. 10 is a cross-sectional schematic view of a battery cell according to some other embodiments of the present application;
FIG. 11 is an enlarged schematic view of the boxed portion in FIG. 10;
FIG. 12 is a schematic structural view of a battery cell according to some other embodiments of the present application;
FIG. 13 is a cross-sectional schematic view taken along an A-A direction in FIG. 12;
FIG. 14 is a cross-sectional schematic view of a battery cell according to some other embodiments of the present application;
FIG. 15 is a cross-sectional schematic view of a battery cell according to some other embodiments of the present application;
FIG. 16 is a schematic structural view of a battery cell according to some other embodiments of the present application;
FIG. 17 is a schematic structural view of an electrode assembly according to some embodiments of the present application; and
FIG. 18 is a schematic flowchart of a manufacturing method for a battery cell according to some embodiments of the present application.

The drawings are not necessarily drawn to scale.

The reference numerals are as follows:
1, vehicle; 2, battery; 3, controller; 4, motor; 5, case; 5a, first case part; 5b, second case part; 5c, accommodating space; 6, battery cell;
10, electrode assembly; 11, first tab; 12, second tab; 13, main body part;
20, shell; 20a, accommodating cavity; 20b, first recess; 20c, first through hole; 20d, second through hole; 20e, second recess; 21, first wall; 22, second wall; 221, pressure relief mechanism; 23, third wall; 24, fourth wall; 25, shell body; 251, shell main body; 252, first edge part; 26, cover plate; 261, cover main body; 262, second edge part; 27, sealing structure;
30, first electrode terminal; 31, first electrode part; 32, second electrode part; 33, third electrode part;
40, insulating member; 41, first insulating layer; 42, second insulating layer; 50, second electrode terminal; 60, first sealing member;
X, first direction; Z, second direction; Y, third direction.

### DETAILED DESCRIPTION

Hereinafter, embodiments of the battery cell, the battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

In the present application, the terms "a plurality of" and "multiple" mean two or more.

Unless otherwise specified, the values of the parameters mentioned in the present application can be measured by various test methods commonly used in the art. For example, they can be measured according to the test methods given in the embodiments of the present application. Unless otherwise specified, all parameters are tested at 25 °C.

In the embodiments of the present application, the battery cell may be a secondary battery. The secondary battery refers to a battery cell that can be reused by activating the active material through charging after the battery cell is discharged.

The battery cell generally includes an electrode assembly, and the electrode assembly includes a positive electrode and a negative electrode. During the charging and discharging processes of the battery cell, active ions (such as lithium ions) are intercalated and deintercalated back and forth between the positive electrode and the negative electrode. Illustratively, the electrode assembly further includes a separator arranged between the positive electrode and the negative electrode, and the separator can prevent the positive electrode and the negative electrode from short-circuiting to a certain extent while allowing the passage of active ions.

The battery cell may include, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell may be a prismatic battery cell or a battery cell of other shapes. The prismatic battery cell includes a square-shell battery cell, a blade-shaped battery cell, or a polygonal prismatic battery, and the polygonal prismatic battery may be, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

The electrode assembly is typically provided with a tab, and the tab is usually connected to the electrode terminal of the battery cell through an adapter structure to lead the current out of the battery cell. However, the adapter structure will occupy the internal space of the battery cell and affect the energy density of the battery cell.

In view of this, the embodiments of the present application provide a battery cell, which directly connects a tab and an electrode terminal, thereby omitting a conventional adapter structure, increasing the space utilization rate inside the battery cell, and improving the energy density of the battery cell.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

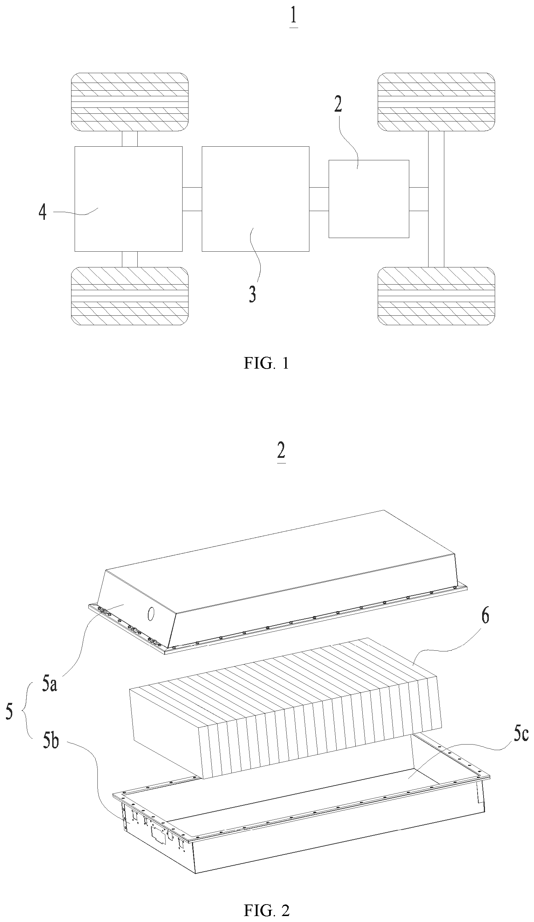

FIG. 1 is a schematic structural view of a vehicle according to some embodiments of the present application.

As shown in FIG. 1, a battery 2 is provided inside a vehicle 1, and the battery 2 may be provided at the bottom, the head, or the tail of the vehicle 1. The battery 2 may be configured to power the vehicle 1. For example, the battery 2 may serve as an operation power source of the vehicle 1.

The vehicle 1 may further include a controller 3 and a motor 4. The controller 3 is configured to control the battery 2 to supply power to the motor 4, e.g., for the operation power needed by the vehicle 1 for start-up, navigation, and driving.

In some embodiments of the present application, the battery 2 may not only serve as the operation power source for the vehicle 1, but also as a driving power source for the vehicle 1 to, instead of or in part instead of fuel or natural gas, provide driving power for the vehicle 1.

FIG. 2 is an exploded schematic view of a battery according to some embodiments of the present application.

As shown in FIG. 2, the battery 2 includes a case 5 and a battery cell 6, and the battery cell 6 is accommodated in the case 5.

The case 5 is configured to accommodate the battery cell 6, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the battery cell 6. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. Certainly, the first case part 5a and the second case part 5b may be of various shapes, such as a cylinder and a rectangular parallelepiped.

To improve the sealing performance after the first case part 5a and the second case part 5b are connected, a sealing member, such as a sealant or a seal ring, may be further provided between the first case part 5a and the second case part 5b.

If the first case part 5a lids the top part of the second case part 5b, the first case part 5a may also be referred to as an upper case cover, and the second case part 5b may also be referred to as a lower case body.

In the battery 2, one or a plurality of battery cells 6 may be provided. If a plurality of battery cells 6 are provided, the plurality of battery cells 6 may be connected in series, in parallel, or in series-parallel. The series-parallel connection means that both series connection and parallel connection are present in the connection of the plurality of battery cells 6. The plurality of battery cells 6 may be directly connected in series, in parallel, or in series-parallel, and then the whole formed by the plurality of battery cells 6 is accommodated in the case 5. Certainly, the situation may be that the plurality of battery cells 6 are first connected in series, in parallel, or in series-parallel to form battery modules, and then the plurality of battery modules are connected in series, in parallel, or in series-parallel to form a whole and accommodated in the case 5.

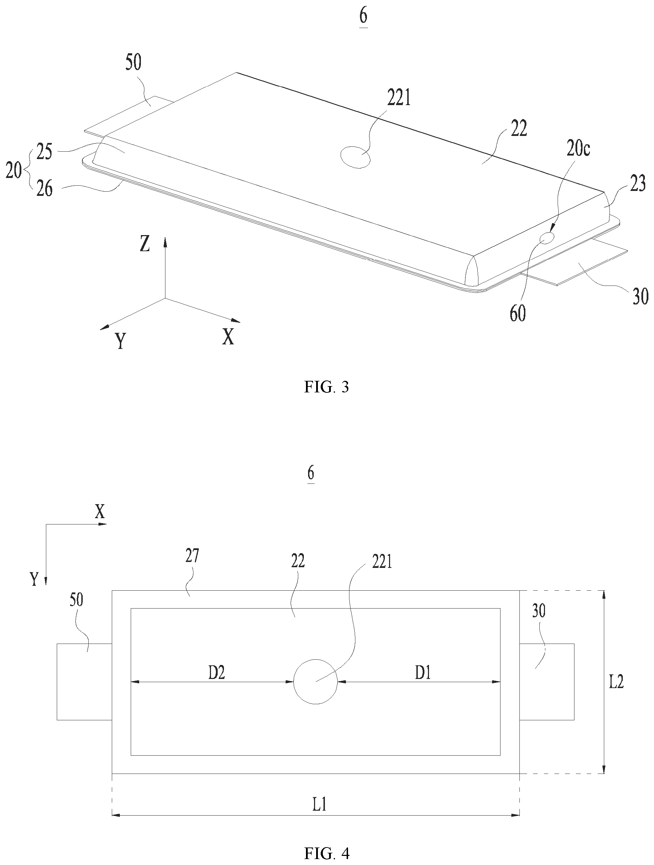

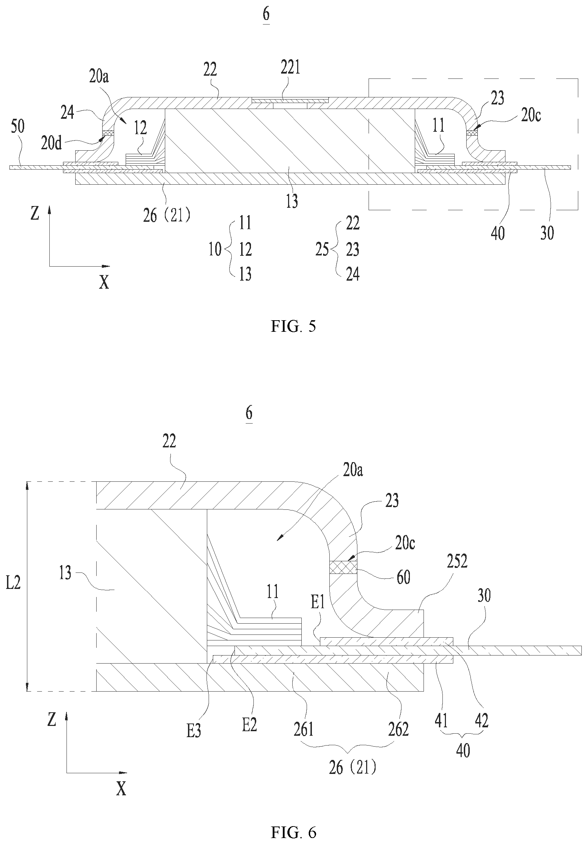

FIG. 3 is a schematic three-dimensional structure view of a battery cell according to some embodiments of the present application; FIG. 4 is a schematic top view of a battery cell according to some embodiments of the present application; FIG. 5 is a cross-sectional schematic view of a battery cell according to some embodiments of the present application; FIG. 6 is an enlarged schematic view of the battery cell shown in FIG. 5 at the boxed portion.

Referring to FIGs. 3 to 6, the embodiments of the present application provide a battery cell 6. The battery cell includes a shell 20 and an electrode assembly 10. The shell 20 is provided with an accommodating cavity 20a, and the electrode assembly 10 is arranged in the accommodating cavity 20a.

The electrode assembly 10 includes a positive electrode and a negative electrode. During the charging and discharging processes of the battery cell 6, active ions (such as lithium ions) are intercalated and deintercalated back and forth between the positive electrode and the negative electrode. Optionally, the electrode assembly 10 further includes a separator arranged between the positive electrode and the negative electrode. The separator can reduce the risk of a short circuit between the positive electrode and the negative electrode while allowing the passage of active ions.

In some embodiments, the positive electrode may be a positive electrode plate, and the positive electrode plate may include a positive electrode current collector and a positive electrode active substance layer arranged on at least one surface of the positive electrode current collector.

As an example, the positive electrode current collector has two surfaces opposite to each other in its own thickness direction, and the positive electrode active substance layer is arranged on either or both of the two opposite surfaces of the positive electrode current collector.

As an example, a metal foil or a composite current collector may be used as the positive electrode current collector. For example, for the metal foil, stainless steel, copper, aluminum, nickel, carbon electrode, carbon, nickel, titanium, aluminum or stainless steel treated with silver on the surface, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active substance layer includes a positive electrode active material, and the positive electrode active material may include at least one of the following materials: a lithium-containing phosphate, a lithium transition metal oxide, and respective modified compounds thereof. However, the present application is not limited to these materials, and other conventional materials that can be used as positive electrode active substance layers for batteries may also be used. These positive electrode active substance layers may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.80}Co_{0.15}Al_{0.05}O₂), and modified compounds thereof.

In some embodiments, a foam metal or a foam carbon may be used as the positive electrode. The foam metal may be foam nickel, foam copper, foam aluminum, foam alloy, or the like. When the foam metal is used as the positive electrode, the surface of the foam metal may not be provided with the positive electrode active substance layer. Certainly, the positive electrode active substance layer may also be provided. As an example, a lithium source material, a potassium metal, or a sodium metal may also be incorporated into or/and deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, a foam carbon, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material arranged on at least one surface of the negative electrode current collector.

As an example, the negative electrode current collector has two surfaces opposite to each other in its own thickness direction, and the negative electrode active material is arranged on either or both of the two opposite surfaces of the negative electrode current collector.

As an example, the negative electrode active material may be a negative electrode active material known in the art for use in battery cells 6. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected and used.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is arranged between the positive electrode and the negative electrode, serving both to transport ions and to isolate the positive electrode from the negative electrode.

The shell 20 is of a hollow structure. An accommodating space for accommodating the electrode assembly 10 and the electrolyte is formed inside the shell. The shape of the shell 20 may be determined according to the specific shape of the electrode assembly 10. For example, if the electrode assembly 10 is of a rectangular parallelepiped structure, a rectangular parallelepiped shell may be used.

The shell 20 may be made of various materials. For example, the shell 20 may be made of metal or plastic. Optionally, the shell 20 may be made of copper, iron, aluminum, steel, aluminum alloy, or the like. Illustratively, the shell 20 may be a steel shell, an aluminum shell, a plastic shell (such as polypropylene), a composite metal shell (such as a copper-aluminum composite shell), an aluminum-plastic film, or the like.

In some embodiments, the battery cell 6 includes a shell 20, an electrode assembly 10, and a first electrode terminal 30. The shell 20 is provided with an accommodating cavity 20a. The electrode assembly 10 is arranged in the accommodating cavity 20a, and the end part of the electrode assembly 10 in a first direction X is provided with a first tab 11. A part of the first electrode terminal 30 is arranged in the accommodating cavity 20a and connected to the first tab 11, and the first electrode terminal 30 passes through the shell 20 and extends to the outer side of the shell 20.

The electrode assembly 10 is a component where the electrochemical reaction occurs in the battery cell 6. One or more electrode assemblies 10 may be accommodated in the shell 20. The electrode assembly 10 may be of a wound structure, a stacked structure, a composite wound and stacked structure, or other structures.

The shape of the electrode assembly 10 may be cylindrical, flat, polygonal prismatic, or the like.

As an example, the electrode assembly 10 includes a first electrode plate, a second electrode plate, and a separator. The polarity of the first electrode plate is opposite to the polarity of the second electrode plate. The separator is configured to insulate the first electrode plate from the second electrode plate. The first electrode plate includes a first current collector and a first active substance layer applied onto the surface of the first current collector, and the second electrode plate includes a second current collector and a second active substance layer applied onto the surface of the second current collector. The first tab 11 includes a part of the first current collector not coated with the first active substance layer. One of the first electrode plate and the second electrode plate is a positive electrode plate, and the other is a negative electrode plate.

The electrode assembly 10 may be provided with the first tab 11 only at one end in the first direction X, or may be provided with the first tab 11 at both ends in the first direction X.

Illustratively, the first electrode terminal 30 may be configured to electrically connect the electrode assembly 10 to the current outside the battery cell 6, thereby achieving the charging and discharging of the battery cell 6.

The first electrode terminal 30 is directly connected to the first tab 11, so that an adapter structure can be omitted, thereby simplifying the structure of the battery cell 6 and improving the energy density.

In some embodiments, the Brinell hardness of the shell 20 is greater than or equal to 30 HB.

Illustratively, the Brinell hardness of the shell 20 may be measured according to the method specified in *GBT231-1984-Metallic Materials-Brinell Hardness Test*.

Optionally, the hardness of the shell 20 is greater than or equal to 30 HB, that is, the hardness value measured by a hardened steel ball indenter is greater than or equal to 30.

The shell 20 has a large hardness and is not easily crushed when being compressed, thereby protecting the electrode assembly 10 and improving the reliability of the battery cell 6. For example, compared with a battery cell using an aluminum-plastic film as the shell, the shell 20 of the battery cell of the present application has a higher hardness, is less likely to be crushed, and has better reliability.

Additionally, the shell 20 in the embodiments of the present application has high hardness, which can reduce the requirement of the shell 20 on the thickness and improve the energy density of the battery cell.

In some embodiments, the hardness of the shell 20 is 30 HB to 600 HB. Optionally, the hardness is 30 HB, 35 HB, 40 HB, 45 HB, 50 HB, 55 HB, 60 HB, 80 HB, 100 HB, 150 HB, 200 HB, 250 HB, 300 HB, 350 HB, 400 HB, 450 HB, 500 HB, 550 HB, or 600 HB.

In some embodiments, the hardness of the shell 20 is 30 HB to 300 HB. Optionally, the hardness of the shell 20 is 30 HB to 60 HB.

In some embodiments, the first electrode terminal 30 and the first tab 11 are stacked and connected in a second direction Z, and the first direction X intersects with the second direction Z. The first electrode terminal 30 and the first tab 11 are stacked and connected, so that the first electrode terminal 30 and the first tab 11 can share a part of the space in the first direction X, thereby increasing the space utilization rate in the first direction X and improving the energy density of the battery cell 6. Additionally, by stacking the first electrode terminal 30 and the first tab 11, the connection area therebetween can be increased.

In some embodiments, the second direction Z is perpendicular to the first direction X. It may be understood that "perpendicular" includes not only a case of being absolutely perpendicular, but also a case of being approximately perpendicular according to common knowledge in engineering.

In some embodiments, the first electrode terminal 30 is of an integrated structure.

In some embodiments, the first electrode terminal 30 is of a sheet-like structure. The sheet-like structure can not only reduce the volume of the first electrode terminal 30, but also increase the contact area between the first electrode terminal 30 and the first tab 11, thereby improving the connection strength and the current passage area between the first electrode terminal 30 and the first tab 11.

In some embodiments, after the first electrode terminal 30 is flattened, the first electrode terminal 30 has a thickness of 0.05 mm to 15 mm, a width of 5 mm to 100 mm, and a length of 10 mm to 100 mm.

Optionally, the first electrode terminal 30 has a thickness of 0.5 mm to 5 mm. Optionally, the first electrode terminal 30 has a width of 10 mm to 40 mm. Optionally, the first electrode terminal 30 has a length of 20 mm to 60 mm.

In some embodiments, the shell 20 includes a shell body 25 and a cover plate 26. The shell body 25 is provided with an opening, and the cover plate 26 is configured to lid the opening.

The shell body 25 is a component configured to form the accommodating cavity 20a of the battery cell 6 in combination with the cover plate 26. The formed accommodating cavity 20a may be used to accommodate the electrode assembly 10, electrolyte, and other components.

The shell body 25 and the cover plate 26 may be separate components. Illustratively, an opening may be formed in the shell body 25, and the cover plate 26 lids the opening to form the internal cavity of the battery cell 6.

The shell body 25 may be in various shapes and dimensions, such as a rectangular parallelepiped and a hexagonal prism. Specifically, the shape of the shell body 25 may be determined based on the specific shape and dimensions of the electrode assembly 10. The shell body 25 may be made of various materials, such as copper, iron, aluminum, stainless steel, and aluminum alloy.

The shape of the cover plate 26 may be adapted to the shape of the shell body 25 to match the shell body 25. The cover plate 26 and the shell body 25 may be made of the same or different materials. Optionally, the cover plate 26 may be made of a material with a certain hardness and strength (for example, copper, iron, aluminum, stainless steel, aluminum alloy, and plastic), so that the cover plate 26 is not easily deformed when being compressed or collided. This provides the battery cell 6 with higher structural strength and improved reliability.

The cover plate 26 may be connected to the shell body 25 by welding, bonding, snap-fitting, or other methods.

The first electrode terminal 30 may pass through the shell body 25, may pass through the cover plate 26, or may pass between the shell body 25 and the cover plate 26.

In some embodiments, the cover plate 26 is made of a metallic material. The metallic material has high hardness, and can effectively protect the electrode assembly 10 from the outer side. Illustratively, the material of the cover plate 26 includes aluminum or aluminum alloy.

In some embodiments, the shell body 25 is made of a metallic material. Illustratively, the material of the shell body 25 includes aluminum or aluminum alloy.

In some embodiments, the cover plate 26 and the shell body 25 are made of the same material.

The metallic material has high strength and good thermal conductivity, and the use of the cover plate 26 and the shell body 25 made of the metallic material can improve the cycle performance of the battery cell 6 and increase the reliability of the battery cell 6.

In some embodiments, both the cover plate 26 and the shell body 25 are made of aluminum, which has high strength and good thermal conductivity. The use of the cover plate 26 and the shell body 25 made of aluminum can improve the cycle performance of the battery cell 6 and increase the reliability of the battery cell 6. The density of aluminum is low. The use of the cover plate 26 and the shell body 25 made of aluminum can also reduce the weight of the battery cell 6 and improve the energy density of the battery cell 6.

In some embodiments, the cover plate 26 and the shell body 25 are connected by welding. Optionally, the cover plate 26 and the shell body 25 are connected by laser welding or ultrasonic welding. Further optionally, the laser welding is non-penetrating laser welding.

In some embodiments, the cover plate 26 has a hardness range of 30 HB to 60 HB. On the premise that the hardness of the cover plate 26 meets the requirement, the material of the cover plate 26 may be flexibly provided to reduce the weight and cost of the cover plate 26.

In some embodiments, the shell body 25 has a hardness range of 30 HB to 60 HB. On the premise that the hardness of the shell body 25 meets the requirement, the material of the shell body 25 may be flexibly provided to reduce the weight and cost of the shell body 25. The hardness of the shell body 25 is set to 30 HB to 60 HB, which can facilitate the forming of the shell body 25.

In some embodiments, the shell body 25 has a thickness of 0.02 mm to 5 mm. Optionally, the shell body 25 has a thickness of 0.1 mm to 0.8 mm to balance the strength and weight of the shell body 25, improve the reliability of the battery cell 6, and increase the energy density of the battery cell 6.

In some embodiments, the cover plate 26 has a thickness of 0.02 mm to 2 mm. Optionally, the cover plate 26 has a thickness of 0.08 mm to 0.5 mm to balance the strength and weight of the cover plate 26, improve the reliability of the battery cell 6, and increase the energy density of the battery cell 6.

In some embodiments, the first tab 11 is welded to the first electrode terminal 30 to reduce the contact resistance between the first tab 11 and the first electrode terminal 30, improve the current passage capacity, and increase the connection strength between the first tab 11 and the first electrode terminal 30.

In some embodiments, the first tab 11 is connected to the first electrode terminal 30 by ultrasonic welding.

In some embodiments, the first tab 11 includes a plurality of tab layers, and the plurality of tab layers are stacked on the first electrode terminal 30 and welded to the first electrode terminal 30.

In some embodiments, the electrode assembly 10 is of a stacked structure.

In some embodiments, the electrode assembly 10 includes a plurality of first electrode plates and a plurality of second electrode plates. The polarity of the first electrode plates is opposite to the polarity of the second electrode plates. The plurality of first electrode plates and the plurality of second electrode plates are alternately stacked in the second direction Z. The electrode assembly 10 adopts a stacked structure, which can improve the space utilization rate and the energy density of the battery cell 6.

In some embodiments, the battery cell 6 further includes an insulating member 40. At least a part of the insulating member 40 is arranged between the shell 20 and the first electrode terminal 30 and is configured to insulate the shell 20 from the first electrode terminal 30.

The insulating member 40 can reduce the risk of conduction between the first electrode terminal 30 and the shell 20, thereby improving the reliability of the battery cell 6.

In some embodiments, in the second direction Z, the projection of the first tab 11 at least partially overlaps the projection of the insulating member 40. The insulating member 40 may insulate at least a part of the first tab 11 from the shell 20.

In some embodiments, the insulating member 40 is bonded to the shell 20 and the first electrode terminal 30. The insulating member 40 can fix the first electrode terminal 30 to the shell 20, thereby improving the stability of the first electrode terminal 30, reducing the force applied onto the joint between the first electrode terminal 30 and the first tab 11 when the battery cell 6 is subjected to an external impact, and reducing the risk of failure of the battery cell 6.

In some embodiments, the material of the insulating member 40 includes, but is not limited to, at least one of polypropylene (PP), polyethylene (PE), or polyvinyl chloride (PVC).

In some embodiments, the insulating member 40 is bonded to the shell 20 and the first electrode terminal 30 through an adhesive layer. Optionally, the adhesive layer includes an AB adhesive (two-component adhesive). Further optionally, the AB adhesive includes an epoxy resin and a curing agent.

In some embodiments, the insulating member 40 is connected to the first electrode terminal 30 and the shell body 25 through a hot pressing and lamination process. The hot pressing and lamination process is simple, and facilitates the connection between the insulating member 40 and the shell 20 and the connection between the insulating member 40 and the first electrode terminal 30. Meanwhile, the bonding force of the composite interface between the insulating member 40 and the shell 20 and the bonding force of the composite interface between the insulating member 40 and the first electrode terminal 30 can be improved, thereby improving the reliability of the battery cell 6.

Illustratively, the surface of the first electrode terminal 30 is provided with a passivation film, and the passivation film is connected to the insulating member 40.

Illustratively, the surface of the shell 20 is provided with a passivation film, and the passivation film is connected to the insulating member 40.

In some embodiments, under an ambient temperature of 25 °C, the elastic modulus of the insulating member 40 is less than the elastic modulus of the first electrode terminal 30. When the battery cell 6 is subjected to an external impact, the insulating member 40 can play a buffering role through deformation, reducing the force applied onto the joint between the first electrode terminal 30 and the insulating member 40 and the force applied onto the joint between the shell 20 and the insulating member 40, reducing the risk of connection failure, and improving the reliability of the battery cell 6.

In some embodiments, at least a part of the insulating member 40 is arranged around the first electrode terminal 30 to insulate the first electrode terminal 30 from the shell 20.

In some embodiments, the insulating member 40 includes a first insulating layer 41 and a second insulating layer 42 that are stacked, and the first electrode terminal 30 passes between the first insulating layer 41 and the second insulating layer 42.

In some embodiments, the first insulating layer 41 and the second insulating layer 42 extend in the first direction X.

In some embodiments, in the first direction X, the inner end E2 of the first electrode terminal extends beyond the inner end E1 of the second insulating layer, and a part of the first electrode terminal 30 extending beyond the second insulating layer 42 is connected to the first tab 11.

The inner end E2 of the first electrode terminal and the inner end E1 of the second insulating layer are offset in the first direction X, so that at least a partial region of the first electrode terminal 30 is not covered by the second insulating layer 42, which facilitates the connection between the first electrode terminal 30 and the first tab 11.

In some embodiments, in the first direction X, the inner end E3 of the first insulating layer extends beyond the inner end E2 of the first electrode terminal. The first insulating layer 41 may insulate the first electrode terminal 30 from the inner surface of the shell.

In some embodiments, in the first direction X, the dimension of the first insulating layer 41 is greater than the dimension of the second insulating layer 42.

In some embodiments, in the first direction X, the outer end of the first insulating layer 41 is flush with the outer end of the second insulating layer 42.

In some embodiments, in a third direction Y, both ends of the first insulating layer 41 extend beyond the first electrode terminal 30, and both ends of the second insulating layer 42 extend beyond the first electrode terminal 30. A part of the first insulating layer 41 extending beyond the first electrode terminal 30 in the third direction Y is connected to the second insulating layer 42.

In some embodiments, the first insulating layer 41, the first tab 11, and the first electrode terminal 30 overlap in the second direction Z. In a region where the three overlap, two surfaces of the first electrode terminal 30 are connected to the first insulating layer 41 and the first tab 11, respectively.

In some embodiments, the electrode assembly 10 further includes a main body part 13, and the first tab 11 extends from the end part of the main body part 13 in the first direction X.

The first tab 11 extends from one end of the main body part 13 in the first direction X. Alternatively, two first tabs 11 may be provided, and the two first tabs 11 extend from both ends of the main body part 13 in the first direction X, respectively.

The main body part 13 includes a part of the first current collector coated with the first active substance layer, a part of the second current collector coated with the second active substance layer, the first active substance layer, and the second active substance layer.

In some embodiments, in the first direction X, the inner end E3 of the first insulating layer is closer to the main body part 13 than the inner end E1 of the second insulating layer.

In some embodiments, the electrode assembly 10 further includes a second tab 12, and the first tab 11 and the second tab 12 have opposite polarities.

Illustratively, the second tab 12 includes a part of the second current collector not coated with the second active substance layer.

The first tab 11 and the second tab 12 may be located at both ends of the electrode assembly 10 in the first direction X, respectively, or may be located at the same end of the electrode assembly 10 in the first direction X.

In some embodiments, the first tab 11 and the second tab 12 may be located at both ends of the electrode assembly 10 in the first direction X, respectively, to increase the distance between the first tab 11 and the second tab 12 and reduce the risk of a short circuit between the first tab 11 and the second tab 12.

The first tab 11 and the second tab 12 extend from both ends of the main body part 13 in the first direction X, respectively, and the two may share space in the third direction Y. Therefore, the first tab 11 and the second tab 12 may have a large dimension in the third direction Y, thereby improving the current passage capacity and reducing the temperature rise of the first tab 11 and the temperature rise of the second tab 12.

In some embodiments, the battery cell 6 further includes a second electrode terminal 50. A part of the second electrode terminal 50 is arranged in the accommodating cavity 20a and connected to the second tab 12, and the second electrode terminal 50 passes through the shell 20 and extends to the outer side of the shell 20.

The second electrode terminal 50 is directly connected to the second tab 12, so that an adapter structure can be omitted, thereby simplifying the structure of the battery cell 6 and improving the energy density.

In some embodiments, the second electrode terminal 50 and the second tab 12 are stacked and connected in the second direction Z. The second electrode terminal 50 and the second tab 12 are connected, so that the second electrode terminal 50 and the second tab 12 can share a part of the space in the first direction X, thereby increasing the space utilization rate in the first direction X and improving the energy density of the battery cell 6.

In some embodiments, the second electrode terminal 50 is welded to the second tab 12.

In some embodiments, the dimension L1 of the shell 20 in the first direction X is greater than the dimension L2 of the shell 20 in the second direction Z. The dimension L1 of the shell 20 in the first direction X is greater than the dimension L3 of the shell 20 in the third direction Y, and any two of the third direction Y, the first direction X, and the second direction Z are perpendicular to each other.

The first tab 11 is arranged at the end part of the electrode assembly 10 in the first direction X. The larger L1 is, the smaller the proportion of the dimension of the first tab 11 in the first direction X is, and the higher the space utilization rate of the battery cell 6 in the first direction X is. In the embodiments of the present application, L1 is set to be greater than L2 and L3, which can improve the space utilization rate and energy density of the battery cell 6.

In some embodiments, the dimension of the shell 20 in the first direction X is L1, the dimension of the shell 20 in the second direction Z is L2, and the dimension of the shell 20 in the third direction Y is L3. 1.2 ≤ L1/L3 ≤ 18, and 1.2 ≤ L3/L2 ≤ 15.

Illustratively, the first direction X is the length direction of the battery cell 6, the second direction Z is the thickness direction of the battery cell 6, and the third direction Y is the width direction of the battery cell 6.

Illustratively, L1 may be the maximum dimension of the shell 20 in the first direction X, L2 may be the maximum dimension of the shell 20 in the second direction Z, and L3 may be the maximum dimension of the shell 20 in the third direction Y.

The first tab 11 is arranged at the end part of the electrode assembly 10 in the first direction X, which will additionally occupy space in the first direction X. The larger L1 is, the smaller the proportion of the dimension of the first tab 11 in the first direction X is, and the higher the space utilization rate of the battery cell 6 in the first direction X is. The larger L2 is, the greater the current passage area of the first tab 11 is, the better the current passage capacity of the first tab 11 is, and the lower the heat generation is.

The smaller L3 is, the shorter the path of the electrode assembly 10 for outward heat dissipation is, and the lower the temperature rise of the battery cell 6 during charging and discharging is. However, the smaller L3 is, the thinner the battery cell 6 is, and the battery cell 6 is more likely to deform under external impact during the production, transportation, and use of the battery cell 6.

On the premise that the volume of the battery cell 6 is constant, L1/L3 is defined to be 1.2 to 18, and L3/L2 is defined to be 1.2 to 15, so that the space utilization rate of the battery cell 6 in the first direction X and the current passage capacity of the first tab 11 can be balanced, the temperature rise of the battery cell 6 can be reduced, the risk of deformation of the battery cell 6 under external impact can be reduced, and the reliability and the cycle performance of the battery cell 6 can be improved.

Optionally, L1/L3 may be 1.2, 2, 3, 4, 5, 7, 8, 10, 12, 14, 15, 17, or 18.

Optionally, L3/L2 may be 1.2, 2, 3, 4, 5, 7, 8, 10, 12, 14, or 15.

In some embodiments, L1/L3 is 3 to 7. L3/L2 is 2 to 7.

In some embodiments, L1 is 10 mm to 3000 mm. Optionally, L1 is 100 mm to 1500 mm.

Optionally, L1 is 10 mm, 50 mm, 100 mm, 300 mm, 400 mm, 500 mm, 600 mm, 1000 mm, 1200 mm, 1500 mm, 2000 mm, 2500 mm, or 3000 mm.

In some embodiments, L3 is 10 mm to 3000 mm. Optionally, L3 is 80 mm to 1000 mm.

Optionally, L3 is 10 mm, 80 mm, 100 mm, 300 mm, 400 mm, 500 mm, 600 mm, 1000 mm, 1200 mm, 1500 mm, 2000 mm, 2500 mm, or 3000 mm.

In some embodiments, L2 is 5 mm to 1000 mm. Optionally, L2 is 10 mm to 300 mm.

Optionally, L32 is 5 mm, 10 mm, 30 mm, 50 mm, 60 mm, 80 mm, 100 mm, 200 mm, 300 mm, 500 mm, 600 mm, 800 mm, or 1000 mm.

In some embodiments, the shell 20 is provided with a pressure relief mechanism 221.

One or a plurality of pressure relief mechanisms 221 may be provided.

The pressure relief mechanism 221 has a significant effect on the reliability of the battery cell 6. For example, in the case of a short circuit, overcharging, or the like, thermal runaway may occur within the battery cell 6, resulting in a rapid increase in pressure. In this case, the internal pressure can be relieved outward by actuating the pressure relief mechanism 221, so as to prevent the battery cell 6 from exploding and catching fire.

The pressure relief mechanism 221 refers to an element or a component that is actuated to relieve the internal pressure when the internal pressure of the battery cell 6 reaches a preset threshold. The designed threshold varies according to different design requirements. The threshold may depend on the material of one or more of the positive electrode plate, the negative electrode plate, the electrolyte, and the separator in the battery cell 6.

The pressure relief mechanism 221 may be arranged on the cover plate 26 or the shell body 25.

In some embodiments, the shell 20 includes a first wall 21 and a second wall 22. The first wall 21 and the second wall 22 are oppositely arranged in the second direction Z. Illustratively, the first wall 21 and the second wall 22 are located on both sides of the accommodating cavity 20a in the second direction Z, respectively.

Both the first wall 21 and the second wall 22 are walls of the shell 20 that have a certain thickness. In some examples, the cover plate 26 includes the first wall 21 and the shell body 25 includes the second wall 22. Alternatively, the cover plate 26 includes the second wall 22 and the shell body 25 includes the first wall 21.

Illustratively, the area of the second wall 22 may be greater than, equal to, or less than the area of the first wall 21. For example, the second wall 22 and the first wall 21 are the same in both shape and dimensions. Alternatively, the area of the second wall 22 may also be less than the area of the first wall 21.

In the second direction Z, the main body part 13 may be arranged between the first wall 21 and the second wall 22.

In some embodiments, the first wall 21 and the second wall 22 are both flat walls.

In some embodiments, the second direction Z is perpendicular to the first direction X and parallel to the thickness direction of the battery cell. Illustratively, the second direction Z is perpendicular to the first wall 21 and the second wall 22.

In some embodiments, the second wall 22 is provided with a pressure relief mechanism 221.

In some examples, the second wall 22 and the pressure relief mechanism 221 may be of an integrally formed structure. In an alternative example, the pressure relief mechanism 221 and the second wall 22 are independently formed members, and the two may be connected by welding, bonding, or other methods. For example, the second wall 22 is provided with a pressure relief hole, the pressure relief hole penetrates through the second wall 22, and the pressure relief mechanism 221 is mounted on the second wall 22 and covers the pressure relief hole to separate the spaces on the inner and outer sides of the second wall 22.

In the case of thermal runaway in the battery cell 6, the pressure relief mechanism 221 can discharge the high-temperature substance in the shell 20 in time, thereby reducing the internal pressure of the battery cell 6, reducing the risk of explosion of the battery cell 6, and improving the reliability of the battery cell 6.

In some embodiments, the second wall 22 and the pressure relief mechanism 221 are integrally formed, and the pressure relief mechanism 221 includes a weak part.

The strength of the weak part is less than the strength of other parts of the second wall 22, and the weak part is a part that is prone to cracking, fracture, tearing, or opening.

In some examples, a groove, a score, or other structures may be provided in a predetermined zone of the second wall 22 to reduce the local strength of the second wall 22, thereby forming the weak part on the second wall 22. For example, a predetermined zone of the second wall 22 is subjected to thinning processing, and the thinned part of the second wall 22 forms the weak part. In some other examples, a predetermined zone of the second wall 22 is subjected to material processing, so that the strength of the zone is weaker than the strength of other zones. In other words, the zone is the weak part.

The second wall 22 and the pressure relief mechanism 221 are integrally formed, which can not only omit the connection process between the second wall 22 and the pressure relief mechanism 221, but also improve the connection strength between the second wall 22 and the pressure relief mechanism 221.

In some embodiments, the second wall 22 is provided with two edges oppositely arranged in the first direction X, and the spacings between the pressure relief mechanism 221 and the two edges in the first direction X are D1 and D2, respectively. D1/D2 is 0.5 to 2.

Illustratively, D1 may be the minimum spacing between the pressure relief mechanism 221 and one edge in the first direction X, and D2 may be the minimum spacing between the pressure relief mechanism 221 and the other edge in the first direction X.

The pressure relief mechanism 221 in the embodiments of the present application is arranged proximal to the middle of the second wall 22 in the first direction X, so that in the case of thermal runaway in the battery cell 6, the gas at both ends of the accommodating cavity 20a in the first direction X can quickly flow to the pressure relief mechanism 221, thereby reducing the pressure difference between both ends of the accommodating cavity 20a and improving the reliability.

Optionally, D1/D2 is 0.5, 0.8, 1, 1.2, 1.5, 1.8, or 2.

Optionally, D1/D2 is 0.8 to 1.2, and further optionally, D1/D2 is 1. The geometric center of the pressure relief mechanism 221 coincides with the geometric center of the second wall 22.

In some embodiments, the pressure relief mechanism 221 may be of a circular structure, an elliptical structure, or a track-shaped structure.

In some embodiments, the pressure relief mechanism 221 has a diameter of 10 mm to 50 mm. Optionally, the pressure relief mechanism 221 has a diameter of 20 mm to 30 mm.

In some embodiments, the shell 20 is provided with a first through hole 20c and a second through hole 20d. The first through hole 20c and the second through hole 20d communicate with both ends of the accommodating cavity 20a in the first direction X, respectively, and the first through hole 20c is configured to inject the electrolyte.

Illustratively, during the production of the battery cell 6, the electrolyte may be injected into the shell 20 through the first through hole 20c.

One or a plurality of first through holes 20c may be provided.

The first through hole 20c and the second through hole 20d may be formed in the same wall of the shell 20, or may be formed in two walls of the shell 20, respectively. For example, the first through hole 20c and the second through hole 20d may be both formed in the first wall 21, or may be both formed in the second wall 22, or may be formed in the first wall 21 and the second wall 22, respectively.

By providing the first through hole 20c and the second through hole 20d, the requirement for electrolyte injection pressure can be reduced. When the electrolyte is injected through the first through hole 20c, the gas inside the shell 20 may be discharged through the second through hole 20d, thereby reducing resistance to the injection of the electrolyte, saving time, and improving the infiltration effect of the electrolyte on the electrode assembly 10.

Additionally, by providing the first through hole 20c and the second through hole 20d at the same time, the conventional vacuuming process can be omitted, thereby saving processes and reducing costs.

In some embodiments, the shell 20 is provided with a first through hole 20c and a second through hole 20d. The first through hole 20c and the second through hole 20d communicate with both ends of the accommodating cavity 20a in the first direction X, respectively, and the second through hole 20d is configured to inject the electrolyte. Illustratively, when the electrolyte is injected, the first through hole 20c may serve as a gas discharge channel.

In some embodiments, the shell 20 is provided with a first through hole 20c and a second through hole 20d. The first through hole 20c and the second through hole 20d communicate with both ends of the accommodating cavity 20a in the first direction X, respectively, and the first through hole 20c and the second through hole 20d are configured to inject the electrolyte. By injecting the electrolyte from both sides simultaneously, the injection efficiency can be improved.

In some embodiments, the first through hole 20c and the second through hole 20d are formed diagonally, which can improve the infiltration effect of the electrolyte on the electrode assembly 10.

In some embodiments, the first through hole 20c is in the shape of a circle, and the first through hole 20c has a diameter of 0.5 mm to 20 mm. Optionally, the first through hole 20c has a diameter of 3 mm to 10 mm.

In some embodiments, the second through hole 20d is in the shape of a circle, and the second through hole 20d has a diameter of 0.5 mm to 20 mm. Optionally, the second through hole 20d has a diameter of 3 mm to 10 mm.

In some embodiments, the hole diameter of the second through hole 20d may be less than or equal to the hole diameter of the first through hole 20c.

Illustratively, for a non-circular hole, the minimum cross-sectional area (i.e., the area of the minimum cross section perpendicular to the axial direction of the hole) being S, the hole diameter of the non-circular hole is: $2 \times \sqrt{S / π} .$

In some embodiments, the shell 20 includes a third wall 23 and a fourth wall 24. The third wall 23 and the fourth wall 24 are located at both ends of the accommodating cavity 20a in the first direction X, respectively. The third wall 23 is provided with a first through hole 20c, and the fourth wall 24 is provided with a second through hole 20d.

The first through hole 20c and the second through hole 20d are formed in the third wall 23 and the fourth wall 24, respectively, so that the included angle between the injection direction of the electrolyte and the first direction X can be reduced, thereby improving the injection efficiency.

In some embodiments, the electrode assembly 10 includes a main body part 13, and the first tab 11 extends from the main body part 13 in the first direction X and beyond the third wall 23. In the first direction X, the first through hole 20c at least partially overlaps the first tab 11.

When the electrolyte is injected through the first through hole 20c, the first tab 11 can block the electrolyte to a certain extent, thereby playing a buffering role, reducing the impact force of the electrolyte on the main body part 13, and reducing the risk of backfolding of the separator of the main body part 13, thereby reducing the risk of a short circuit and improving the reliability.

In some embodiments, the hole diameter of the first through hole 20c is H1, the volume of the accommodating cavity 20a is H2, and 100 ml/mm ≤ H2/H1 ≤ 1000 ml/mm.

Illustratively, the first through hole 20c may be an equal-diameter hole or a variable-diameter hole. In the case that the first through hole 20c is a variable-diameter hole, H1 is the minimum hole diameter of the first through hole 20c.

Illustratively, for the non-circular first through hole 20c, the minimum cross-sectional area (that is, the area of the minimum cross section perpendicular to the axial direction of the first through hole 20c) of the first through hole 20c is S1. In this case, the hole diameter of the first through hole 20c is: $2 \times \sqrt{S 1 / π} .$

Illustratively, the test method for the volume H2 of the accommodating cavity 20a is as follows: Under a stable environment of 25 °C, a solvent is injected into the accommodating cavity 20a (the accommodating cavity 20a does not contain any other component, such as an electrode assembly) through the first through hole 20c until the accommodating cavity 20a is filled. The weight of the shell 20 is G1; the total weight of the shell 20 and the solvent after the solvent fills the accommodating cavity 20a is G2; the density of the solvent is ρ. The volume H2 of the accommodating cavity 20a = (G2 - G1)/ρ.

The smaller H2/H1 is, the higher the injection efficiency of the electrolyte is. Correspondingly, the smaller H2/H1 is, the lower the strength around the first through hole 20c is, and the higher the risk of deformation and cracking of the shell 20 at the first through hole 20c is when the battery cell 6 is subjected to an external impact. In the embodiments of the present application, H2/H1 is defined to be 100 ml/mm to 1000 ml/mm, which can improve the injection efficiency of the electrolyte, reduce costs, and improve the reliability of the battery cell 6.

Optionally, H2/H1 is 100 ml/mm, 200 ml/mm, 300 ml/mm, 400 ml/mm, 500 ml/mm, 600 ml/mm, 700 ml/mm, 800 ml/mm, 900 ml/mm, or 1000 ml/mm.

In some embodiments, the battery cell 6 includes a first sealing member 60 configured to seal the first through hole 20c. Illustratively, the first sealing member 60 is connected to the shell 20.

In some embodiments, the battery cell 6 includes a second sealing member (not shown) configured to seal the second through hole 20d.

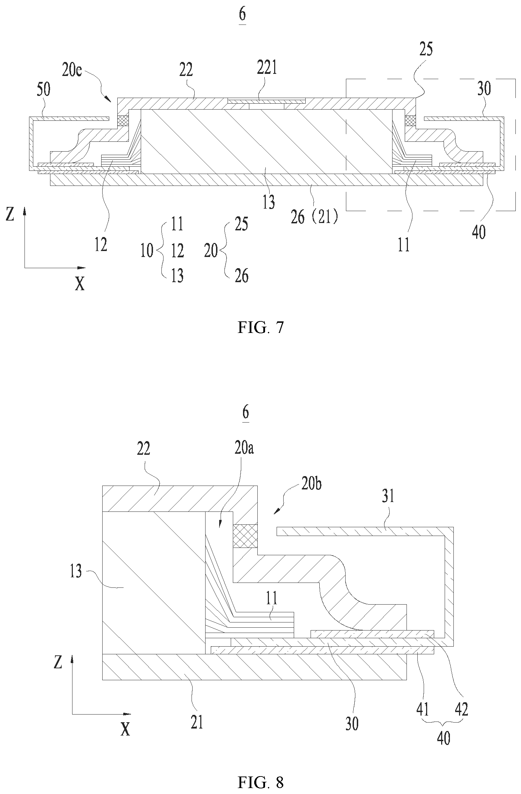

FIG. 7 is a cross-sectional schematic view of a battery cell according to some other embodiments of the present application; FIG. 8 is an enlarged schematic view of the boxed portion in FIG. 7.

As shown in FIG. 7, in some embodiments, the shell 20 is provided with a first recess 20b, and the first recess 20b is arranged on the outer side of the accommodating cavity 20a.

The first electrode terminal 30 includes a first electrode part 31 located on the outer side of the shell 20, and the first electrode part 31 is configured so that the projection of the first electrode part in the second direction Z at least partially overlaps the projection of the first recess 20b in the second direction Z.

In some examples, the first electrode part 31 may extend into the first recess 20b, so that the first electrode part 31 overlaps the first recess 20b in the second direction Z. In some other examples, the first electrode part 31 may also extend to one side of the shell 20 facing away from the first recess 20b, so that the first electrode part 31 overlaps the first recess 20b in the second direction Z.

In the embodiments of the present application, the first recess 20b and the first electrode part 31 can be enabled to share a part of the space in the first direction X, thereby increasing the space utilization rate of the battery cell 6 in the first direction X and improving the energy density of the battery cell 6.

In some embodiments, the first electrode terminal 30 passes through the shell 20 and extends to the outer side of the shell 20. The projection of the extended end of the first electrode terminal 30 in the second direction Z is located within the projection of the first recess 20b in the second direction Z.

In some embodiments, the first recess 20b is recessed from the second wall 22 toward the first wall 21.

In some embodiments, the first electrode part 31 extends out from the end part of the shell 20 in the first direction X. At least a part of the first electrode part 31 is accommodated in the first recess 20b.

At least a part of the first electrode part 31 is accommodated in the first recess 20b, which can reduce the additional space occupied by the first electrode part 31 in the second direction Z, increase the space utilization rate of the battery cell 6 in the second direction Z, and improve the energy density of the battery cell 6.

In some embodiments, the first electrode terminal 30 passes between the cover plate 26 and the shell body 25 and is bent back, so that the outer end of the first electrode terminal 30 extends into the first recess 20b.

Illustratively, the first electrode terminal 30 is bent into a C-shaped structure.

In some embodiments, the first electrode part 31 is spaced apart from the bottom wall of the first recess 20b, and the first electrode part 31 is spaced apart from the side wall of the first recess 20b, thereby reducing the risk of a short circuit.

In some embodiments, the bottom wall of the first recess 20b and the side wall of the first recess 20b are both provided with an insulating layer (not shown). Optionally, the insulating layer is bonded to the bottom wall of the first recess 20b and the side wall of the first recess 20b.

In some embodiments, the first through hole 20c may be formed in the side wall of the first recess 20b or the bottom wall of the first recess 20b.

In some embodiments, the third wall 23 is an irregular-shaped wall including the bottom wall of the first recess 20b and the side wall of the first recess 20b.

In some embodiments, the shell 20 is provided with a second recess 20e, and the second recess 20e is recessed relative to the surface of the second wall 22 facing away from the first wall 21.

Illustratively, the first recess 20b and the second recess 20e are located on both sides of the second wall 22 in the first direction X, respectively.

In some embodiments, a part of the second electrode terminal 50 located on the outer side of the shell 20 extends into the second recess 20e.

Illustratively, the second electrode terminal 50 is bent into a C-shaped structure.

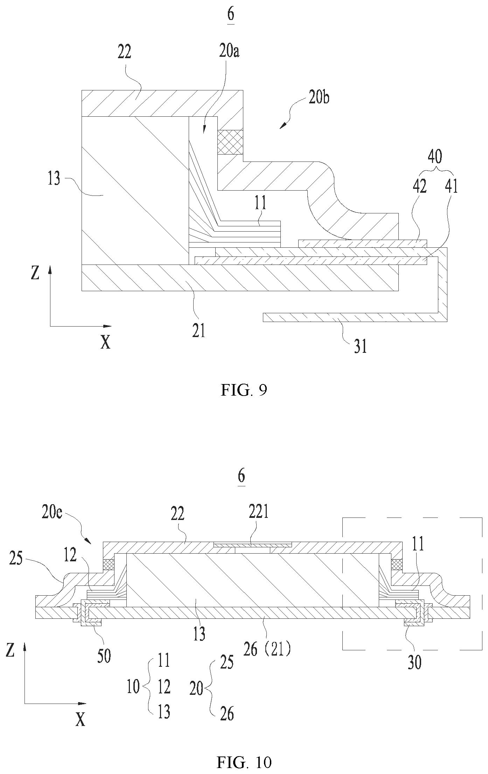

FIG. 9 is a partial cross-sectional schematic view of a battery cell according to some other embodiments of the present application.

As shown in FIG. 9, in some embodiments, the first electrode part 31 extends out from the end part of the shell 20 in the first direction X. At least a part of the first electrode part 31 is located on one side of the shell 20 facing away from the first recess 20b in the second direction Z.

Illustratively, at least a part of the first electrode part 31 is located on one side of the first wall 21 facing away from the first recess 20b.

When two battery cells 6 are arranged in the second direction Z, the first recess 20b of one battery cell 6 can avoid the first electrode terminal 30 of the other battery cell 6, thereby improving the space utilization rate and increasing the energy density of the battery.

Illustratively, when two battery cells 6 are arranged in the second direction Z and need to be connected in parallel, the first recess 20b of one battery cell 6 can avoid the first electrode terminal 30 of the other battery cell 6, and the second recess 20e of the one battery cell 6 can avoid the second electrode terminal 50 of the other battery cell 6.

When two battery cells 6 are arranged in the second direction Z and need to be connected in series, the first recess 20b of one battery cell 6 can avoid the second electrode terminal 50 of the other battery cell 6, and the second recess 20e of the one battery cell 6 can avoid the first electrode terminal 30 of the other battery cell 6.

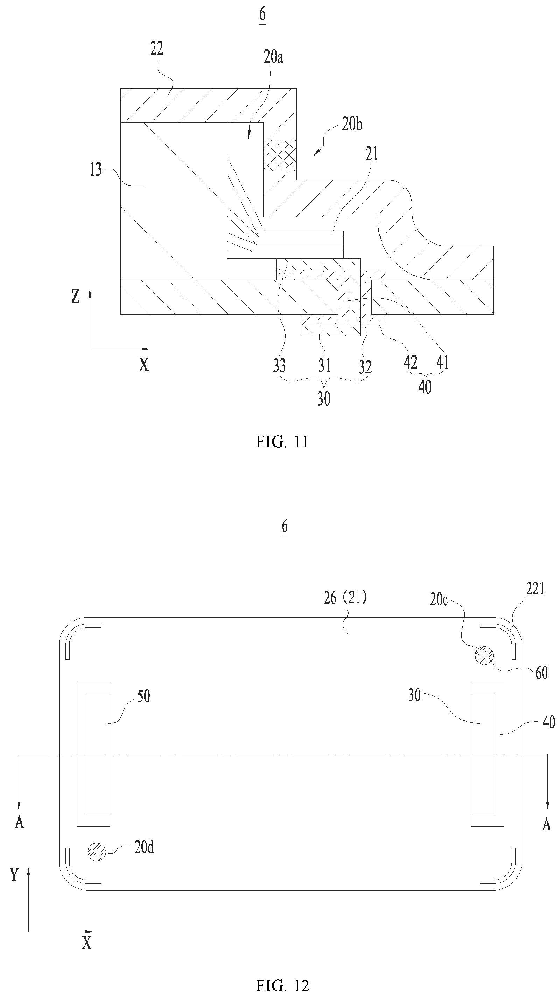

FIG. 10 is a cross-sectional schematic view of a battery cell according to some other embodiments of the present application; FIG. 11 is an enlarged schematic view of the boxed portion in FIG. 10.

As shown in FIGs. 10 and 11, in some embodiments, the shell 20 includes a first wall 21 and a second wall 22. The first wall 21 and the second wall 22 are located on both sides of the accommodating cavity 20a in the second direction Z, respectively. The first recess 20b is recessed from the second wall 22 toward the first wall 21. The first electrode terminal 30 extends out from the first wall 21 in the second direction Z. At least a part of the first electrode part 31 is located on one side of the first wall 21 facing away from the first recess 20b.

Illustratively, the first wall 21 is a flat wall.

Illustratively, the first electrode terminal 30 passes through the first wall 21.

When two battery cells 6 are arranged in the second direction Z, the first recess 20b of one battery cell 6 can avoid the first electrode part 31 of the other battery cell 6, thereby improving the space utilization rate and increasing the energy density of the battery.

Illustratively, when two battery cells 6 are arranged in the second direction Z and need to be connected in parallel, the first recess 20b of one battery cell 6 can avoid the first electrode part 31 of the other battery cell 6, and the second recess 20e of the one battery cell 6 can avoid the second electrode terminal 50 of the other battery cell 6.

When two battery cells 6 are arranged in the second direction Z and need to be connected in series, the first recess 20b of one battery cell 6 can avoid the second electrode terminal 50 of the other battery cell 6, and the second recess 20e of the one battery cell 6 can avoid the first electrode part 31 of the other battery cell 6.

In some embodiments, the first electrode terminal 30 further includes a second electrode part 32 and a third electrode part 33. The second electrode part 32 passes through the first wall 21, and the first electrode part 31 and the third electrode part 33 extend in the same direction from both ends of the second electrode part 32, respectively. The third electrode part 33 is arranged in the accommodating cavity 20a, and is stacked with and connected to the first tab 11 in the second direction Z.

By providing the second electrode part 32 and the third electrode part 33, the connection between the first electrode terminal 30 and the first tab 11 is facilitated. The first electrode part 31 and the third electrode part 33 extend in the same direction, so that the first electrode part 31 and the third electrode part 33 can sandwich a part of the first wall 21 from both sides, thereby improving the connection strength between the first electrode terminal 30 and the first wall 21.

In some embodiments, the first electrode part 31 and the third electrode part 33 extend in the first direction X from both ends of the second electrode part 32, respectively. Illustratively, the first electrode part 31 and the third electrode part 33 extend from both ends of the second electrode part 32 toward the main body part, respectively.

In some embodiments, the projection of the third electrode part 33 in the second direction Z at least partially overlaps the projection of the first recess 20b in the second direction Z. The third electrode part 33 and the first recess 20b may share space in the first direction X, thereby improving the space utilization rate.

In some embodiments, the projection of the end of the first electrode part 31 distal to the second electrode part 32 in the second direction Z is located within the projection of the first recess 20b in the second direction Z.

In some embodiments, the first electrode part 31, the second electrode part 32, and the third electrode part 33 form a C-shaped structure.

In some embodiments, the insulating member 40 insulates the first electrode terminal 30 from the first wall 21.

In some embodiments, the first insulating layer 41 is bent into a C-shaped structure and separates the first electrode part 31, the second electrode part 32, and the third electrode part 33 from the first wall 21; the second insulating layer 42 is bent into a C-shaped structure and separates the first electrode part 31 and the third electrode part 33 from the first wall 21.

In some embodiments, the battery cell includes a shell, an electrode assembly, and a first electrode terminal. The shell is provided with an accommodating cavity. The Brinell hardness of the shell is greater than or equal to 30 HB. The shell includes a first wall and a second wall, the first wall and the second wall are located on both sides of the accommodating cavity in a second direction, respectively, the shell is provided with a first recess, and the first recess is recessed from the second wall toward the first wall. The electrode assembly is arranged in the accommodating cavity, the end part of the electrode assembly in a first direction is provided with a first tab, and the second direction is perpendicular to the first direction. The first electrode terminal includes a first electrode part, a second electrode part, and a third electrode part. The first electrode part is located on the outer side of the shell, the second electrode part passes through the first wall, and the third electrode part is arranged in the accommodating cavity, and is stacked with and connected to the first tab in the second direction. The first electrode part and the third electrode part extend in the same direction from both ends of the second electrode part, respectively, at least a part of the first electrode part is located on one side of the first wall facing away from the first recess, and the projection of the end of the first electrode part distal to the second electrode part in the second direction is located within the projection of the first recess in the second direction.

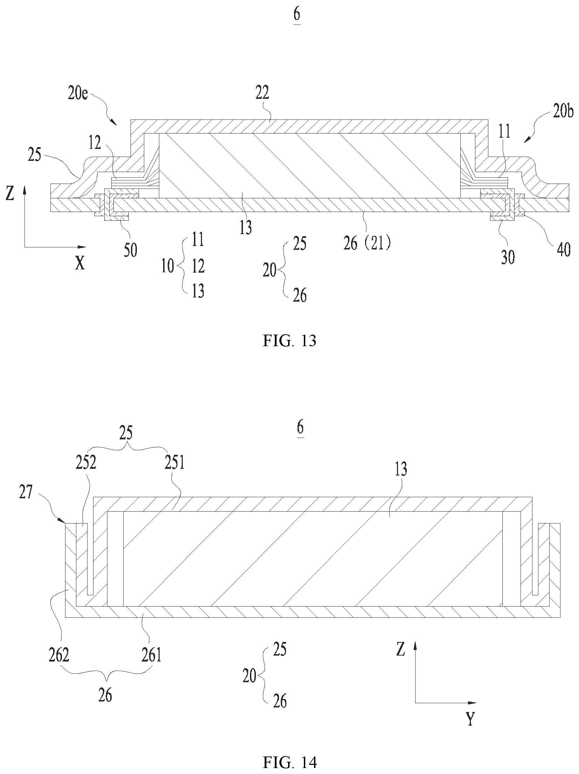

FIG. 12 is a schematic structural view of a battery cell according to some other embodiments of the present application; FIG. 13 is a cross-sectional schematic view taken along an A-A direction in FIG. 12.

As shown in FIGs. 12 and 13, in some embodiments, both the first through hole 20c and the second through hole 20d are formed in the first wall 21.

By forming the first through hole 20c in the first wall 21, the electrolyte can be injected into the shell 20 in the second direction Z, thereby reducing the impact force of the electrolyte on the main body part 13.

In some embodiments, in the third direction Y, the first through hole 20c is located on one side of the first electrode terminal 30.

In some embodiments, in the third direction Y, the second through hole 20d is located on one side of the second electrode terminal 50. Optionally, the first through hole 20c and the second through hole 20d are formed diagonally.

In some other embodiments, both the first through hole 20c and the second through hole 20d are formed in the second wall 22. In yet some other embodiments, the first through hole 20c is formed in the first wall 21, and the second through hole 20d is formed in the second wall 22. In still some other embodiments, the first through hole 20c is formed in the second wall 22, and the second through hole 20d is formed in the first wall 21.

In some embodiments, the pressure relief mechanism 221 is arranged on the first wall 21. Optionally, the pressure relief mechanism 221 is arranged proximal to the edge of the first wall 21.

In some embodiments, four pressure relief mechanisms 221 are provided, and the four pressure relief mechanisms 221 are arranged at four corners of the first wall 21, respectively.

FIG. 14 is a cross-sectional schematic view of a battery cell according to some other embodiments of the present application.

As shown in FIG. 14, in some embodiments, the shell body 25 includes a shell main body 251 and a first edge part 252 extending from the circumferential edge of the shell main body 251. The cover plate 26 includes a cover main body 261 and a second edge part 262 extending from the circumferential edge of the cover main body 261. The shell main body 251 and the cover main body 261 define, in an enclosing manner, the accommodating cavity 20a, and the first edge part 252 and the second edge part 262 are connected to form a sealing structure 27.

Illustratively, the first edge part 252 and the second edge part 262 may be connected by bonding, welding, or other methods to form the sealing structure 27. Illustratively, the shell main body 251 and the cover main body 261 are arranged in the second direction Z.

Illustratively, the shell main body 251 includes the second wall 22.

At least a part of the first edge part 252 is connected to the second edge part 262.

By providing the first edge part 252 and the second edge part 262, the connection strength between the shell body 25 and the cover plate 26 can be improved, thereby improving the sealing effect.

In some embodiments, at least a part of the first edge part 252 is welded to the second edge part 262 to form a weld mark. The sealing structure 27 includes a weld mark. The welding process is simple and easy to implement. The weld mark has high strength and good sealing performance.

In some embodiments, the weld mark includes two long sides extending in the first direction and two short sides extending in the third direction Y. Illustratively, the long side may be formed by laser welding, and the short side may be formed by ultrasonic welding.

In some embodiments, the weld mark has a width of 1 mm to 10 mm. Optionally, the weld mark has a width of 1 mm, 2 mm, 3 mm, 5 mm, 8 mm, or 10 mm.

In some embodiments, the first edge part 252 and the second edge part 262 are welded by non-penetrating laser welding. Illustratively, a laser is irradiated on the first edge part 252, and the laser melts through the first edge part 252 and does not melt through the second edge part 262.

In some embodiments, after the shell body 25 and the cover plate 26 are welded, cutting is performed on the weld mark to reduce the volume of the battery cell 6.

In some embodiments, the first tab 11 and the second tab 12 pass through the first wall 21.

In some embodiments, the weld mark extends around the entire perimeter of the accommodating cavity 20a.

In some embodiments, in combination with FIGs. 6 and 14, the first electrode terminal 30 passes between the first edge part 252 and the second edge part 262. The battery cell 6 further includes an insulating member 40. At least a part of the insulating member 40 wraps a part of the first electrode terminal 30 located between the first edge part 252 and the second edge part 262 and is bonded to the first edge part 252 and the second edge part 262 to insulate the first electrode terminal 30 from the shell body 25 and insulate the first electrode terminal 30 from the cover plate 26.

The insulating member 40 and the sealing structure 27 jointly achieve the sealing of the shell 20.

In some embodiments, at least a part of the sealing structure 27 is bent toward the shell main body 251. By bending the sealing structure 27, the maximum dimension of the battery cell 6 can be reduced, and the energy density of the battery cell 6 can be improved.

In some embodiments, the sealing structure 27 is bonded to the shell main body 251 through an adhesive layer.

In some embodiments, the parts of the sealing structure 27 located on both sides of the shell main body 251 in the third direction Y are bent toward the shell main body 251 to reduce the dimension of the battery cell 6 in the third direction Y.

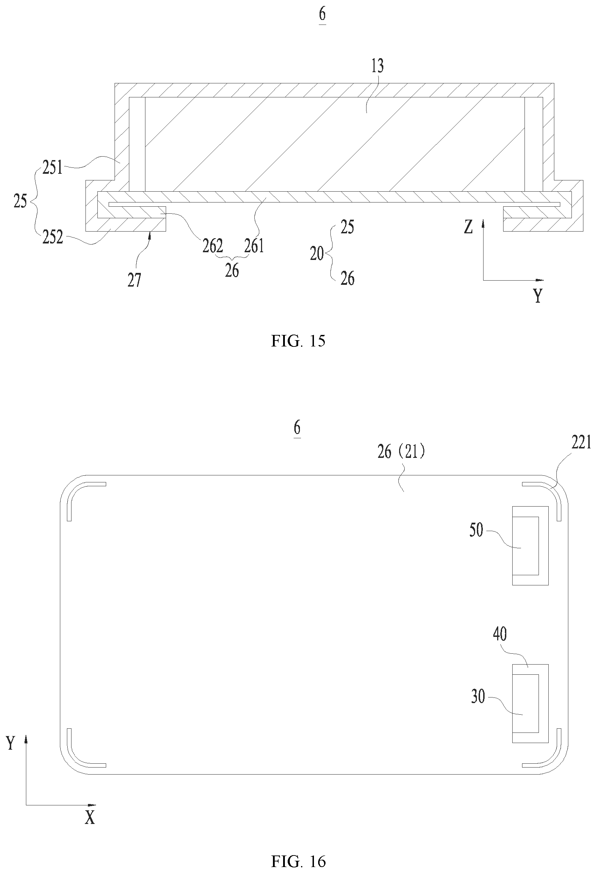

FIG. 15 is a cross-sectional schematic view of a battery cell according to some other embodiments of the present application.

As shown in FIG. 15, in some embodiments, at least a part of the sealing structure 27 is bent to one side of the cover main body 261 facing away from the shell main body 251.

In the embodiments of the present application, the dimension of the battery cell 6 in the first direction X or the dimension of the battery cell 6 in the third direction Y can be reduced.

In some embodiments, the sealing structure 27 is bonded to the cover main body 261 by an adhesive layer.

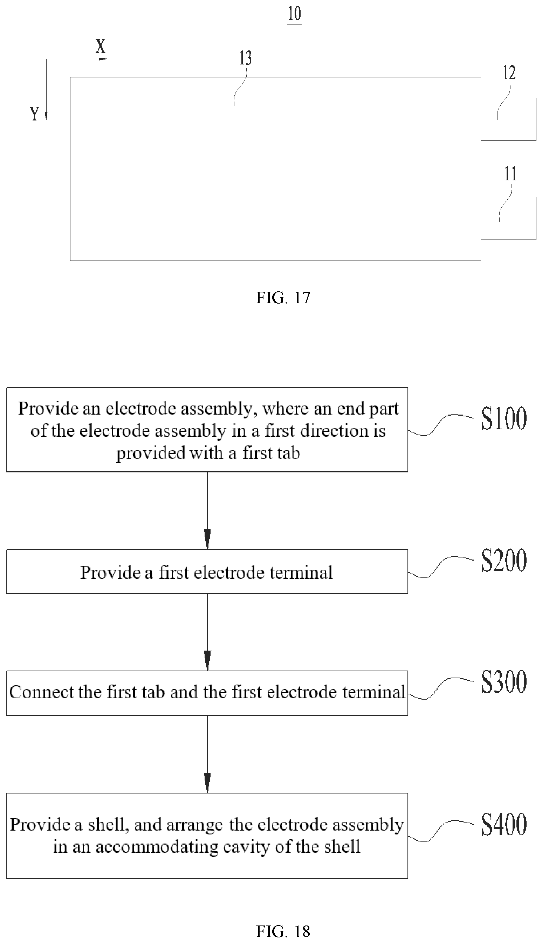

FIG. 16 is a schematic structural view of a battery cell according to some other embodiments of the present application; FIG. 17 is a schematic structural view of an electrode assembly according to some embodiments of the present application.

As shown in FIGs. 16 and 17, in some embodiments, the first tab 11 and the second tab 12 are located at the same end of the electrode assembly 10 in the first direction X, so that the first tab 11 and the second tab 12 share space in the first direction X, thereby improving the space utilization rate of the battery cell 6 in the first direction X.

In some embodiments, the first electrode terminal 30 and the second electrode terminal 50 are arranged at the same end of the first wall 21 in the first direction X.

In some embodiments, the first electrode terminal 30 and the second electrode terminal 50 are arranged in the third direction Y.

According to some embodiments of the present application, the present application further provides a battery. The battery includes a plurality of battery cells according to any one of the above embodiments.

According to some embodiments of the present application, the present application further provides an electric device. The electric device includes the battery cell according to any one of the above embodiments. The battery cell is configured to provide electric energy for the electric device. The electric device may be any one of the aforementioned devices or systems that use the battery cell.

Referring to FIGs. 3 to 6, the embodiments of the present application provide a battery cell 6. The battery cell includes a shell 20, an electrode assembly 10, a first electrode terminal 30, a second electrode terminal 50, and an insulating member 40.

The electrode assembly 10 is accommodated in the shell 20 and includes a main body part 13, a first tab 11, and a second tab 12. The first tab 11 and the second tab 12 extend from both ends of the main body part 13 in the first direction X, respectively.

The shell 20 includes a shell body 25 and a cover plate 26. The shell body 25 is provided with an opening, and the cover plate 26 is configured to lid the opening and define an accommodating cavity 20a with the shell body 25. The shell body 25 and the cover plate 26 are both made of a metallic material, and the two are connected by welding. The hardness of the shell body 25 is 30 HB to 60 HB, and the hardness of the cover plate 26 is 30 HB to 60 HB.

The first electrode terminal 30 passes between the shell body 25 and the cover plate 26 and extends to the outside of the shell 20. A part of the first electrode terminal 30 is arranged in the accommodating cavity 20a, and is stacked with and connected to the first tab 11 in the second direction Z. The second electrode terminal 50 passes between the shell body 25 and the cover plate 26 and extends to the outside of the shell 20. A part of the second electrode terminal 50 is arranged in the accommodating cavity 20a, and is stacked with and connected to the second tab 12 in the second direction Z. The second direction Z is perpendicular to the first direction X.

The insulating member 40 surrounds the outer periphery of the first electrode terminal 30, and insulates the first electrode terminal 30 from the shell body 25 and insulates the first electrode terminal 30 from the cover plate 26.

The shell body 25 is provided with a pressure relief mechanism 221. The shell body 25 is provided with a first through hole 20c and a second through hole 20d. The first through hole 20c and the second through hole 20d communicate with both ends of the accommodating cavity 20a in the first direction X, respectively, and the first through hole 20c is configured to inject the electrolyte.

FIG. 18 is a schematic flowchart of a manufacturing method for a battery cell according to some embodiments of the present application.

Referring to FIGs. 3 to 18, the present application further provides a manufacturing method for a battery cell. The method includes the following:

In S100, an electrode assembly 10 is provided, where the end part of the electrode assembly 10 in a first direction X is provided with a first tab 11.

In S200, a first electrode terminal 30 is provided.

In S300, the first tab 11 and the first electrode terminal 30 are connected.

In S400, a shell 20 is provided, and the electrode assembly 10 is arranged in an accommodating cavity 20a of the shell 20.

The Brinell hardness of the shell 20 is greater than or equal to 30 HB, a part of the first electrode terminal 30 is arranged in the accommodating cavity 20a, and the first electrode terminal 30 passes through the shell 20 and extends to the outer side of the shell 20.

The first electrode terminal 30 and the first tab 11 are connected, so that the first electrode terminal 30 and the first tab 11 can share a part of the space in the first direction X, thereby increasing the space utilization rate in the first direction X and improving the energy density of the battery cell 6. Additionally, the first electrode terminal 30 is directly connected to the first tab 11, so that an adapter structure can be omitted, thereby simplifying the structure of the battery cell 6 and improving the energy density. The shell 20 has a large hardness and is not easily crushed when being compressed, thereby protecting the electrode assembly 10 and improving the reliability of the battery cell 6.

In some embodiments, step S300 includes: welding the first tab 11 to the first electrode terminal 30. Illustratively, the first tab 11 is connected to the first electrode terminal 30 by ultrasonic welding.

The first tab 11 is welded to the first electrode terminal 30 to reduce the contact resistance between the first tab 11 and the first electrode terminal 30, improve the current passage capacity, and increase the connection strength between the first tab 11 and the first electrode terminal 30.

In some embodiments, step S400 includes the following:

In S410, a shell body 25 is provided, where the shell body 25 includes a shell main body 251 and a first edge part 252 extending from the circumferential edge of the shell main body 251.

In S420, the electrode assembly 10 is placed into the shell main body 251.

In S430, a cover plate 26 is provided, where the cover plate 26 includes a cover main body 261 and a second edge part 262 extending from the circumferential edge of the cover main body 261.

In S440, the cover plate 26 is lidded onto the shell body 25, and the first edge part 252 and the second edge part 262 are connected to form a sealing structure 27.

The shell main body 251 and the cover main body 261 define, in an enclosing manner, the accommodating cavity 20a, and the first electrode terminal 30 passes between the first edge part 252 and the second edge part 262.

In some embodiments, step S440 includes: connecting the first edge part 252 and the second edge part 262 by laser welding to form the sealing structure 27.

The welding process is simple and easy to implement.

Illustratively, the first edge part 252 and the second edge part 262 are connected by laser welding and/or ultrasonic welding.

In some embodiments, the manufacturing method further includes the following: In step S500, the sealing structure 27 is cut. By cutting the sealing structure 27, the volume of the battery cell can be reduced.

In some embodiments, the manufacturing method further includes the following: In step S600, the sealing structure 27 is bent toward the shell main body 251. By bending the sealing structure 27, the maximum dimension of the battery cell 6 can be reduced, and the energy density of the battery cell 6 can be improved.

Although the present application has been described with reference to preferred embodiments, various modifications can be made and components herein can be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery cell, comprising:
a shell, provided with an accommodating cavity, wherein a Brinell hardness of the shell is greater than or equal to 30 HB;
an electrode assembly, arranged in the accommodating cavity, wherein an end part of the electrode assembly in a first direction is provided with a first tab; and
a first electrode terminal, wherein a part of the first electrode terminal is arranged in the accommodating cavity and connected to the first tab, and the first electrode terminal passes through the shell and extends to an outer side of the shell.

2. The battery cell according to claim 1, wherein the first tab is welded to the first electrode terminal.

3. The battery cell according to claim 1 or 2, further comprising an insulating member, wherein at least a part of the insulating member is arranged between the shell and the first electrode terminal and is configured to insulate the shell from the first electrode terminal.

4. The battery cell according to claim 3, wherein the insulating member is bonded to the shell and the first electrode terminal.

5. The battery cell according to claim 4, wherein under an ambient temperature of 25 °C, an elastic modulus of the insulating member is less than an elastic modulus of the first electrode terminal.

6. The battery cell according to any one of claims 3 to 5, wherein the insulating member comprises a first insulating layer and a second insulating layer that are stacked and extend in the first direction, and the first electrode terminal passes between the first insulating layer and the second insulating layer;
in the first direction, an inner end of the first electrode terminal extends beyond an inner end of the second insulating layer, and a part of the first electrode terminal extending beyond the second insulating layer is connected to the first tab;
in the first direction, an inner end of the first insulating layer extends beyond the inner end of the first electrode terminal.

7. The battery cell according to any one of claims 1 to 6, wherein
the shell is provided with a first recess, and the first recess is arranged on an outer side of the accommodating cavity;
the first electrode terminal comprises a first electrode part located on the outer side of the shell, the first electrode part is configured so that a projection of the first electrode part in a second direction at least partially overlaps a projection of the first recess in the second direction, and the second direction is perpendicular to the first direction.

8. The battery cell according to claim 7, wherein the first electrode part extends out from an end part of the shell in the first direction;
at least a part of the first electrode part is accommodated in the first recess, or at least a part of the first electrode part is located on one side of the shell facing away from the first recess in the second direction.

9. The battery cell according to claim 7, wherein
the shell comprises a first wall and a second wall, wherein the first wall and the second wall are located on both sides of the accommodating cavity in the second direction, respectively, the first recess is recessed from the second wall toward the first wall, and the first electrode terminal extends out from the first wall in the second direction;
at least a part of the first electrode part is located on one side of the first wall facing away from the first recess.

10. The battery cell according to claim 9, wherein the first electrode terminal further comprises a second electrode part and a third electrode part, wherein the second electrode part passes through the first wall, and the first electrode part and the third electrode part extend in a same direction from both ends of the second electrode part, respectively;
the third electrode part is arranged in the accommodating cavity, and is stacked with and connected to the first tab in the second direction.

11. The battery cell according to any one of claims 1 to 10, wherein a dimension of the shell in the first direction is greater than a dimension of the shell in the second direction;
the dimension of the shell in the first direction is greater than a dimension of the shell in a third direction, and any two of the third direction, the first direction, and the second direction are perpendicular to each other.

12. The battery cell according to claim 11, wherein the dimension of the shell in the first direction is L1, the dimension of the shell in the second direction is L2, and the dimension of the shell in the third direction is L3; $1.2 \leq L 1 / L 3 \leq 18 , and 1.2 \leq L 3 / L 2 \leq 15 .$

13. The battery cell according to any one of claims 1 to 12, wherein the shell comprises a first wall and a second wall oppositely arranged in the second direction, the second direction is perpendicular to the first direction and parallel to a thickness direction of the battery cell, and both the first wall and the second wall are flat walls;
the second wall is provided with a pressure relief mechanism.

14. The battery cell according to claim 13, wherein the second wall is provided with two edges oppositely arranged in the first direction, and spacings between the pressure relief mechanism and the two edges in the first direction are D1 and D2, respectively;
D1/D2 is 0.5 to 2.

15. The battery cell according to any one of claims 1 to 14, wherein the shell is provided with a first through hole and a second through hole, wherein the first through hole and the second through hole communicate with both ends of the accommodating cavity in the first direction, respectively, and the first through hole and/or the second through hole are configured to inject an electrolyte.

16. The battery cell according to claim 15, wherein the shell comprises a first wall and a second wall, wherein the first wall and the second wall are located on both sides of the accommodating cavity in the second direction, respectively, and the second direction is perpendicular to the first direction;
both the first through hole and the second through hole are formed in the first wall; or both the first through hole and the second through hole are formed in the second wall; or the first through hole is formed in the first wall, and the second through hole is formed in the second wall.

17. The battery cell according to claim 15, wherein the shell comprises a third wall and a fourth wall, wherein the third wall and the fourth wall are located at both ends of the accommodating cavity in the first direction, respectively;
the third wall is provided with the first through hole, and the fourth wall is provided with the second through hole.

18. The battery cell according to claim 17, wherein
the electrode assembly comprises a main body part, the first tab extends from the main body part in the first direction and beyond the third wall in the first direction, and the first through hole at least partially overlaps the first tab.

19. The battery cell according to any one of claims 15 to 18, wherein a hole diameter of the first through hole is H1, a volume of the accommodating cavity is H2, and 100 ml/mm ≤ H2/H1 ≤ 1000 ml/mm.

20. The battery cell according to any one of claims 1 to 19, wherein the shell comprises:
a shell body, comprising a shell main body and a first edge part extending from a circumferential edge of the shell main body; and
a cover plate, comprising a cover main body and a second edge part extending from a circumferential edge of the cover main body, wherein the shell main body and the cover main body define, in an enclosing manner, the accommodating cavity, and the first edge part and the second edge part are connected to form a sealing structure.

21. The battery cell according to claim 20, wherein at least a part of the first edge part is welded to the second edge part to form a weld mark, and the sealing structure comprises the weld mark.

22. The battery cell according to claim 20 or 21, wherein the first electrode terminal passes between the first edge part and the second edge part;
the battery cell further comprises an insulating member, wherein at least a part of the insulating member wraps a part of the first electrode terminal located between the first edge part and the second edge part and is bonded to the first edge part and the second edge part to insulate the first electrode terminal from the shell body and insulate the first electrode terminal from the cover plate.

23. The battery cell according to any one of claims 20 to 22, wherein at least a part of the sealing structure is bent toward the shell main body; or
at least a part of the sealing structure is bent to one side of the cover main body facing away from the shell main body.

24. The battery cell according to any one of claims 20 to 23, wherein both the cover plate and the shell body are made of aluminum.

25. The battery cell according to any one of claims 20 to 24, wherein the cover plate has a hardness range of 30 HB to 60 HB, and the cover plate has a thickness of 0.02 mm to 2 mm; and/or
the shell body has a hardness range of 30 HB to 60 HB, and the shell body has a thickness of 0.02 mm to 5 mm.

26. The battery cell according to any one of claims 1 to 25, wherein the electrode assembly further comprises a second tab;
the battery cell further comprises a second electrode terminal, wherein a part of the second electrode terminal is arranged in the accommodating cavity and connected to the second tab, and the second electrode terminal passes through the shell and extends to the outer side of the shell.

27. The battery cell according to claim 26, wherein
the first tab and the second tab are located at both ends of the electrode assembly in the first direction, respectively; or
the first tab and the second tab are located at a same end of the electrode assembly in the first direction.

28. A battery, comprising a plurality of said battery cells according to any one of claims 1 to 27.

29. An electric device, comprising the battery according to claim 28, wherein the battery is configured to provide electric energy.

30. A manufacturing method for a battery cell, comprising:
providing an electrode assembly, wherein an end part of the electrode assembly in a first direction is provided with a first tab;
providing a first electrode terminal;
connecting the first tab and the first electrode terminal; and
providing a shell, and arranging the electrode assembly in an accommodating cavity of the shell,
wherein a Brinell hardness of the shell is greater than or equal to 30 HB, a part of the first electrode terminal is arranged in the accommodating cavity, and the first electrode terminal passes through the shell and extends to an outer side of the shell.

31. The manufacturing method according to claim 30, wherein the step of connecting the first tab and the first electrode terminal comprises:
welding the first tab to the first electrode terminal.

32. The manufacturing method according to claim 30, wherein the step of providing the shell and arranging the electrode assembly in the accommodating cavity of the shell comprises:
providing a shell body, wherein the shell body comprises a shell main body and a first edge part extending from a circumferential edge of the shell main body;
placing the electrode assembly into the shell main body;
providing a cover plate, wherein the cover plate comprises a cover main body and a second edge part extending from a circumferential edge of the cover main body; and
lidding the shell body with the cover plate, and connecting the first edge part and the second edge part to form a sealing structure,
wherein the shell main body and the cover main body define, in an enclosing manner, the accommodating cavity, and the first electrode terminal passes between the first edge part and the second edge part.

33. The manufacturing method according to claim 32, wherein the step of connecting the first edge part and the second edge part to form the sealing structure comprises:
connecting the first edge part and the second edge part by laser welding to form the sealing structure.

34. The manufacturing method according to claim 33, further comprising:
cutting the sealing structure; and
bending the sealing structure toward the shell main body.
